# EUROPEAN PATENT APPLICATION

(11) **EP 4 645 511 A1**
(43) Date of publication of application: **05.11.2025**
(21) Application number: 23911786.4
(22) Date of filing: 15.12.2023
(51) Int. Cl.: H01M 10/0587, H01M 4/134, H01M 4/38, H01M 10/052, H01M 50/449, H01M 50/463

(54) **LITHIUM SECONDARY BATTERY AND SEPARATOR**

(30) Priority: 27.12.2022 JP 2022210609
(71) Applicant: Panasonic Intellectual Property Management Co., Ltd., Kadoma-shi, Osaka 571-0057 (JP)
(72) Inventor: KONDO, Shinichiro, Kadoma-shi, Osaka 571-0057 (JP); FUKUOKA, Takahiro, Kadoma-shi, Osaka 571-0057 (JP); MIYAMAE, Ryohei, Kadoma-shi, Osaka 571-0057 (JP); KANO, Akira, Kadoma-shi, Osaka 571-0057 (JP)
(74) Representative: Novagraaf International SA
(86) International application number: PCT/JP2023/045079
(87) International publication number: WO 2024/143005

(57) **Abstract**

A lithium secondary battery includes: an electrode group including a positive electrode, a negative electrode facing the positive electrode, and a separator disposed between the positive electrode and the negative electrode; and a non-aqueous electrolyte. At least one member selected from the group consisting of the positive electrode, the negative electrode, and the separator has a spacer layer. The spacer layer includes a line-shaped first portion following a first geometric pattern and a line-shaped second portion following a second geometric pattern, and at least the second portion has a plurality of cutouts. When the member is divided in the first direction into a near center portion having an area S1 and two outer portions each having 1/2 of the area S1, the center portion includes the first portion, and the proportion of the cutouts present in the near center portion is smaller than the proportion of the cutouts present in the outer portions.

## Description

### [Technical Field]

The present disclosure relates to a lithium secondary battery including a nonaqueous electrolyte having lithium ion conductivity.

### [Background Art]

Non-aqueous electrolyte secondary batteries are used in ICT applications such as personal computers and smartphones, in-vehicle applications, power storage applications, and the like. In such applications, non-aqueous electrolyte secondary batteries are required to have a higher capacity. Lithium-ion batteries are known as high-capacity non-aqueous electrolyte secondary batteries. Lithium-ion batteries can reach a high capacity by using, for example, graphite and an alloy active material such as a silicon compound in combination as a negative electrode active material. However, increases in the capacity of lithium-ion batteries are reaching a limit.

Lithium secondary batteries (lithium metal secondary batteries) are promising as non-aqueous electrolyte secondary batteries with high capacities that exceed those of lithium-ion batteries. In a lithium secondary battery, lithium metal is deposited on the negative electrode during charging, and this lithium metal dissolves in the non-aqueous electrolyte during discharging.

PTL 1 proposes providing a spacer (protrusion) between a positive electrode and a separator to ensure a space for deposition of lithium metal during charging, thereby improving charge-discharge efficiency and suppressing cracks in a negative electrode current collector due to the negative electrode being locally expanded. The spacer is disposed between the positive electrode and the separator such that, when a straight line is drawn in a width direction (lateral direction) of the positive electrode current collector, the straight line passes through the spacer at three or more points.

### [Citation List]

### [Patent Literature]

PTL 1: International Publication No. 2020/0066254

### [Summary of Invention]

### [Technical Problem]

The spacers tend to reduce circulation of the electrolyte solution around the spacers. Therefore, the spacers can be arranged so as not to impede the circulation of the electrolyte solution as much as possible, for example, by arranging a plurality of spacers intermittently to provide gaps. However, the effect of gaps provided for ensuring the flow path of the electrolyte solution may reduce the ability of the spacers to ensure the space for deposition of lithium metal.

### [Solution to Problem]

One aspect of the present disclosure relates to a lithium secondary battery including: an electrode group including a positive electrode, a negative electrode facing the positive electrode, a separator disposed between the positive electrode and the negative electrode; and a nonaqueous electrolyte, wherein the positive electrode and the negative electrode are rolled up with the separator interposed between the positive electrode and the negative electrode, the positive electrode, the negative electrode, and the separator have an elongate shape having a length D2 in a first direction D1 parallel to a rolling-up axis and a length L2 in a second direction D2 perpendicular to the first direction (L1 < L2), at the negative electrode, lithium metal is deposited during charging and the lithium metal dissolves during discharging, at least one member selected from the group consisting of the positive electrode, the negative electrode, and the separator has a spacer layer, the spacer layer includes at least a line-shaped first portion following a first geometric pattern and a line-shaped second portion following a second geometric pattern, at least the first portion has a plurality of cutouts such that the first portion is not continuous in both the first direction and the second direction, and when the member is divided in the first direction into a near center portion having an area S1 and two outer portions each having an area of 1/2 of the area S1, the near center portion includes the first portion, and a proportion of the cutouts present in the near center portion is smaller than a proportion of the cutouts present in the outer portions.

Another aspect of the present disclosure relates to a separator having an elongate shape having a length L1 in a first direction D1 and a length L2 in a second direction D2 perpendicular to the first direction (L1 < L2), the separator including: a base material layer; and a spacer layer, wherein the spacer layer is constituted by a plurality of protrusions such that the spacer layer is not continuous in both the first direction and the second direction, the spacer layer includes at least a line-shaped first portion following a first geometric pattern and a line-shaped second portion following a second geometric pattern, at least the second portion has a plurality of cutouts such that the second portion is not continuous in both the first direction and the second direction, and when the separator is divided in the first direction into a near center portion having an area S1 and two outer portions each having an area of 1/2 of the area S1, the near center portion includes the first portion, and a proportion of the cutouts present in the near center portion is smaller than a proportion of the cutouts present in the outer portions.

### [Advantageous Effects of Invention]

According to the present disclosure, it is possible to suppress deterioration of cycle characteristics of a lithium secondary battery.

Novel features of the present invention are set forth in the appended claims, but the present invention, both in terms of structure and content, together with other objects and features of the present invention, will be better understood from the following detailed description taken in conjunction with the drawings.

### [Brief Description of Drawings]

FIG. 1 is a plan view schematically showing an example of an arrangement of a spacer layer provided on a surface of a separator in a lithium secondary battery according to an embodiment of the present disclosure.
FIG. 2A is a plan view schematically showing another example of the arrangement of a spacer layer provided on a surface of the separator.
FIG. 2B is a plan view schematically showing another example of the arrangement of a spacer layer provided on a surface of the separator.
FIG. 3 is a plan view schematically showing still another example of the arrangement of the spacer layer provided on a surface of the separator.
FIG. 4 is a plan view schematically showing still another example of the arrangement of the spacer layer provided on a surface of the separator.
FIG. 5 is a longitudinal cross-sectional view schematically showing a lithium secondary battery according to an embodiment of the present disclosure.
FIG. 6 is an enlarged view schematically showing a main portion of the lithium secondary battery shown in FIG. 5.

### [Description of Embodiments]

Hereinafter, embodiments of the present disclosure will be described by way of examples, but the present disclosure is not limited to the examples described below. In the following description, specific numeric values, materials, and the like may be given as examples, but other numeric values, materials, and the like may also be applied as long as effects of the present disclosure can be obtained. Note that constituent elements of known secondary batteries may be applied to constituent elements other than portions that are characteristic of the present disclosure. In this specification, the expression "numeric value A to numeric value B" includes numeric value A and numeric value B, and can be read as "numeric value A or more and numeric value B or less". In the following description, when a lower limit and an upper limit are given as examples of numeric values regarding specific physical properties, conditions, and the like, any of the exemplified lower limits can be combined with any of the exemplified upper limits in any combination, as long as the lower limit is not greater than or equal to the upper limit. When a plurality of materials are mentioned as examples, one of them may be selected and used alone, or two or more of them may be used in combination.

Also, the present disclosure encompasses combinations of items respectively recited in two or more claims selected from the attached claims. That is to say, it is possible to combine items respectively recited in two or more claims selected from the attached claims, as long as no technical contradiction arises.

A lithium secondary battery according to an embodiment of the present disclosure includes; an electrode group including a positive electrode, a negative electrode facing the positive electrode, a separator disposed between the positive electrode and the negative electrode; and a non-aqueous electrolyte. The positive electrode and the negative electrode are rolled up with the separator interposed between the positive electrode and the negative electrode. The positive electrode, the negative electrode, and the separator have an elongate shape having a length L1 in a first direction D1 parallel to a rolling-up axis and a length L2 in a second direction D2 perpendicular to the first direction, and the length L1 is shorter than the length L2 (L1 < L2). The lithium secondary battery is of a type of a secondary battery in which lithium metal is deposited on the negative electrode during charging and the lithium metal dissolves from the negative electrode during discharging. Hereinafter, the positive electrode and the negative electrode may be collectively referred to as "electrodes".

In the lithium secondary battery, for example, 70% or more of the rated capacity is realized by deposition and dissolution of lithium metal. The movement of electrons at the negative electrode during charging and discharging is primarily due to the deposition and dissolution of lithium metal at the negative electrode. Specifically, 70% to 100% (e.g., 80% to 100% or 90% to 100%) of the movement of electrons (or, from another perspective, current) at the negative electrode during charging and discharging is due to the deposition and dissolution of lithium metal. That is, the negative electrode of the lithium secondary battery differs from a negative electrode in which the movement of electrons in the negative electrode during charging and discharging is mainly due to the absorption and release of lithium ions by the negative electrode active material (such as graphite).

At least one member selected from the group consisting of the positive electrode, the negative electrode, and the separator has a spacer layer. The spacer layer forms a space between the positive electrode and the separator or between the negative electrode and the separator, and suppresses expansion of the negative electrode due to the battery being charged and discharged.

### (Spacer Layer)

The spacer layer ensures the space for deposition of lithium metal on the surface of the negative electrode, and reduces a change in the volume of the negative electrode caused by deposition of lithium metal. The spacer layer is provided as protrusions on at least one of the positive electrode, the negative electrode, and the separator. The spacer layer or the protrusions may be provided on a surface of the positive electrode, may be provided on a surface of the negative electrode, or may be provided on a surface of the separator facing the positive electrode or the negative electrode. The protrusions provided on the surface of the positive electrode and/or the surface of the separator facing the positive electrode form the space between the positive electrode and the separator, and the protrusions provided on the surface of the negative electrode and/or the surface of the separator facing the negative electrode forms the space between the negative electrode and the separator. The space suppresses expansion of the negative electrode accompanying charging and discharging of the battery and suppresses deterioration of cycle characteristics.

The spacer layer includes at least a line-shaped first portion following a first geometric pattern and a line-shaped second portion following a second geometric pattern. The spacer layer may include a third portion following a third geometric pattern, in addition to the first portion and the second portion. The line-shaped geometric pattern includes a straight line-shaped pattern and a curved line-shaped pattern. In addition, a mesh-like geometric pattern is obtained by connecting a plurality of straight and/or curved line-shaped patterns to form a mesh, and is therefore included in the line-shaped patterns. Also, a dot-like geometric pattern is considered to be a pattern in which the extension length of a line-shaped protrusion is as short as about the line width of the line-shaped protrusion and is included in the line-shaped pattern.

At least the second portion has a plurality of cutouts such that the second portion is not continuous in both the first direction and the second direction. An electrolyte solution can circulate through cutouts, which improves circulation of the electrolyte solution and further suppresses deterioration of cycle characteristics. In addition to the second portion, the first portion and/or the third portion may have cutouts. As will be described later, the second portion is located farther outward from the center in the first direction than the first portion. The proportion of the cutouts present (presence proportion of the cutouts) in each of the first portion, the second portion, and the third portion is determined such that the presence proportion of the cutouts decreases toward the center in the first direction.

In addition, in the first direction, the member is divided into a near center portion having an area S1, and an outer portion other than the near center portion. The outer portion is constituted by two portions, each having 1/2 of the area S1, at both ends in the first direction. In this case, the first portion is included in the near center portion.

The proportion of the cutouts present in the near center portion is smaller than the proportion of the cutouts present in the outer portions. This makes it possible to maintain high circulation of the electrolyte solution while ensuring a sufficient space for deposition of lithium metal. As a result, it is possible to sufficiently suppress deterioration of cycle characteristics.

The outer portions are more likely to have poor circulation of the electrolyte solution than the near center portion. In view of this, the proportion of the cutouts present in the outer portions is made greater than that in the near center portion, and priority is given to ensuring a flow path for the electrolyte solution. On the other hand, in the near center portion, the presence proportion of the cutouts is made smaller than in the outer portions, giving priority to ensuring the space for deposition of lithium metal, thereby preventing the space from being crushed due to an increase in internal pressure and the like, and suppressing a reduction of the volume of the space for deposition of lithium metal. This makes it possible to suppress poor liquid circulation and ensure a space for the deposition of lithium metal, thereby significantly suppressing deterioration of cycle characteristics.

Here, the presence proportion of the cutouts means a ratio of the total length of the cutouts to the total length of line-shaped protrusions when it is presumed that line-shaped protrusions are present in cutouts. The length of each of the plurality of cutouts is the shortest separation distance between two adjacent line-shaped protrusions that sandwich the cutout in a direction in which the line-shaped protrusions extend. The presence proportion of cutouts is calculated by adding up all the protrusions and cutouts included in a region to be evaluated.

From the viewpoint of reliably ensuring a space for deposition of lithium metal in the near center portion, when a virtual line parallel to the first direction is drawn at a given position on the member, the virtual line preferably always passes through the first portion at one or more points in the near center portion. In this case, the first portion may extend continuously along the second direction without having cutouts.

In addition, when a virtual line parallel to the first direction is drawn at a given position on the member provided with the spacer layer, the virtual line preferably passes through the spacer layer at two or more points. In this case, since two protrusions facing each other in the first direction are present at the given position in the second direction, a space for deposition of lithium metal can be reliably ensured. On the other hand, if a virtual line parallel to the first direction at a given position in the second direction does not pass through the spacer layer or passes through the spacer layer at only one point, the space in a surrounding region of the virtual line may be crushed due to an increase in the internal pressure of the electrode group caused by the deposition of lithium metal, and sufficient space may not be ensured. Since the virtual line passes through the spacer layer at two or more points at the given position in the second direction, the space for deposition of lithium metal can be more reliably ensured, and deterioration of cycle characteristics can be suppressed.

The first geometric pattern may be, for example, a substantially linear pattern extending along the second direction. The first geometric pattern may be a pattern in which a plurality of line-shaped protrusions are arranged (continuously or intermittently) along a plurality of straight lines that are substantially parallel to the second direction.

The second geometric pattern may be, for example, a substantially linear pattern extending along the second direction, or may be a mesh-like pattern. The second geometric pattern as a linear pattern may be a pattern in which a plurality of line-shaped protrusions are intermittently arranged along a plurality of straight lines that are substantially parallel to the second direction. In this case, the plurality of line-shaped protrusions may be arranged in a staggered manner.

A shape of the mesh in a mesh-like pattern is not particularly limited, and may be polygonal, and is preferably rectangular or hexagonal. From the viewpoint of inhibiting the space between the electrode and the separator from becoming uneven, the interior angle of the polygon may be 120° or less. A rectangular mesh may be rectangular or square, or may be diamond shaped.

From the viewpoint of ensuring the minimum necessary space between an electrode and the separator, an average height h of the protrusions may be 0.02 mm or more and 0.09 mm or less, or 0.015 mm or more and 0.01 mm or less, depending on the battery size. The average height h of the protrusions is determined by averaging values measured at any ten points.

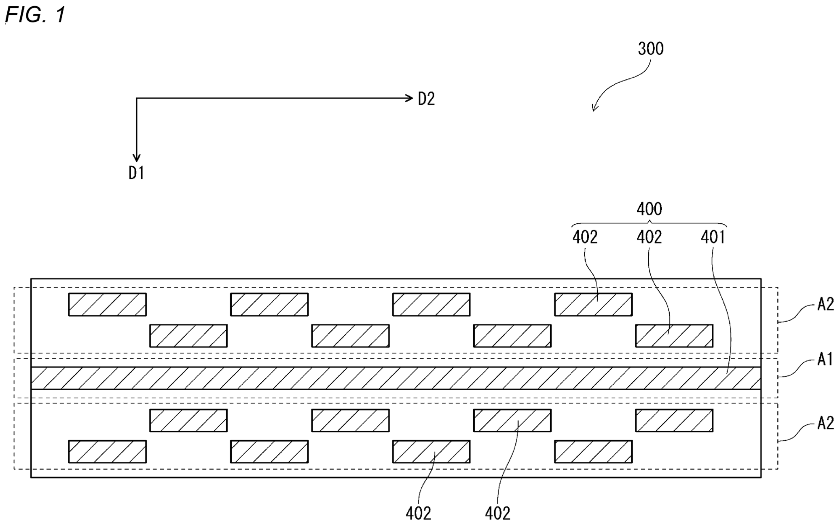

From the viewpoint of improving the circulation of the nonaqueous electrolyte on the surface of the negative electrode, the height of some of the protrusions may be different from the height of the remaining protrusions, and the heights of protrusions that are adjacent to each other may be different from each other. The plurality of protrusions may include a protrusion with a height h1 and a protrusion with a height h2 that is smaller than the height h1. In this case, a ratio h2/h1 of the height h2 to the height h1 may be, for example, 0.8 or more and less than 1.0, or 0.8 or more and 0.95 or less. The width of the protrusion (a width W of a line-shaped protrusion 401 in FIG. 1) is, for example, 1 mm or less, and 0.1 mm or more and 1 mm or less.

From the viewpoint of suppressing deposition of lithium metal on the surfaces of the protrusions, protrusions may be made of a material having lower conductivity than the electrodes, or may be made of a resin material.

There is no particular limitation on a material for forming the spacer layer. The spacer layer may be made of a conductive material and/or an insulating material. In particular, an insulating material is preferable. Because lithium metal is less likely to be deposited on the surface of an insulating material, the effect of suppressing expansion of the negative electrode can be enhanced.

The conductive material can be selected as appropriate from materials described below as materials for the negative electrode current collector or the positive electrode current collector. Such a spacer layer may be provided by forming protrusions on the negative electrode current collector through pressing or the like. In addition, a conductive paint may be applied to a surface of the separator or an electrode, or a piece of conductive tape may be attached to a surface of the separator or the electrode.

The insulating material may be a resin material, for example. Examples of the resin material include polyolefin resin, acrylic resin, polyamide resin, polyimide resin, silicone resin, fluorine-based resin, urethane resin, melamine resin, and urea resin. A product obtained by curing a curable resin such as an epoxy resin may be used as the resin material. In addition, these resin materials may be mixed with inorganic fillers or the like.

A material for forming the spacer layer is desirably a material having a Young's modulus of 0.01 GPa or more and 10 GPa or less. This makes it possible to easily alleviate stress caused by the expansion and contraction of the negative electrode, and easily maintain a space for accommodating lithium metal. In addition, damage to electrodes caused by the spacer layer can be easily suppressed. Examples of insulating materials having a Young's modulus in the above range include products obtained by curing the above curable resin.

The spacer layer can be formed by, for example, attaching a piece of resin adhesive tape to the surface of a separator or an electrode. Also, the spacer layer may be formed by applying a solution or dispersion containing a resin material to the surface of the separator or the electrode and drying the solution or dispersion. The spacer layer may be formed by applying a curable resin to the surface of the separator or the electrode in a desired shape and curing the curable resin. Alternatively, the spacer layer may be formed by spraying resin particles to the surface of the separator or the electrode in a desired shape.

The spacer layers can be provided on surfaces on both sides of a member. In this case, the spacer layer includes a first spacer layer disposed on a first surface of a member, and a second spacer layer disposed on a second surface of a member. When the protrusion formed by the first spacer layer and the protrusion formed by the second spacer layer are arranged in a pattern that satisfies the above-mentioned relationship of the cutouts, a space for deposition of lithium metal can be reliably ensured, and deterioration of cycle characteristics can be suppressed.

The lithium secondary battery may include a stacked-type electrode group formed by stacking the positive electrode and the negative electrode with the separator interposed between the positive electrode and the negative electrode, or may include a rolled-up type electrode group formed by spirally rolling up the positive electrode and the negative electrode with the separator interposed therebetween.

The separator according to an embodiment of the present disclosure relates to a separator provided with the above spacer layer. The separator has an elongate shape having a length L1 in the first direction D1 and a length L2 in the second direction D2 perpendicular to the first direction (L1 < L2), and has a base material layer and a spacer layer. The spacer layer is constituted by a plurality of protrusions such that the spacer layer is not continuous in both the first direction and the second direction. The spacer layer includes at least a line-shaped first portion following a first geometric pattern and a line-shaped second portion following a second geometric pattern. At least the second portion has a plurality of cutouts such that the second portion is not continuous in both the first direction and the second direction. When the separator is divided in the first direction into a near center portion having an area S1 and two outer portions each having 1/2 of the area S1, the near center portion includes the first portion. The proportion of the cutouts present in the near center portion is smaller than the proportion of the cutouts present in the outer portions.

Hereinafter, an arrangement of the spacer layer will be described with reference to the drawings. In the illustrated example, the spacer layer is provided on the surface of the separator. However, embodiments of the present disclosure are not limited to this, and the spacer layer may be provided on a surface of an electrode.

FIG. 1 is a plan view schematically showing the spacer layer arranged on the surface of the separator.

In the example shown in FIG. 1, a spacer layer 400 has a protrusion 401 (first portion) arranged in a first geometric pattern in a first region A1 located at the center in the first direction D1 on the separator surface, and protrusions 402 (second portions) arranged in a second geometric pattern in second regions A2 located on the outer side of the first region A1 on the separator surface.

The protrusion 401 is a line-shaped protrusion that extends substantially parallel to the second direction D2 and is formed continuously. The protrusion 401 does not have a cutout. Therefore, the proportion of the cutouts present in the first region A1 is 0%.

The protrusions 402 are a plurality of line-shaped protrusions extending substantially parallel to each other along the second direction D2, and extend intermittently in two second regions A2 located on the outer side of the center of the separator 300 in the first direction D1, along four straight lines (two for each second region) extending substantially parallel to each other along the second direction D2. Note that the expression "substantially parallel" means roughly parallel, and line-shaped protrusions may intersect at an angle of, for example, 0° to 20°, or 0° to 10°.

In each of the second regions A2, the line-shaped protrusions extending along one of two straight lines along the second direction D2 and the line-shaped protrusions extending along the remaining straight line are located at different positions in the second direction D2. In other words, regarding the protrusions 402, the line-shaped protrusions are arranged in a staggered manner. The length of each protrusion 402 is approximately the same as the length of the cutout. Therefore, the proportion of the cutouts present in the second region A2 is 50%.

Therefore, when a surface region of the separator 300 is divided into a near center portion having an area S1 and two outer portions each having 1/2 of the area S1, the proportion of the cutouts present in the near center portion is smaller than the proportion of the cutouts present in the outer portions.

In the example shown in FIG. 1, when a straight line parallel to the first direction D1 is drawn at a given position of the separator 300, the straight line always passes through the protrusion 401 at one point in the first region A1 included in the near center portion, and passes through the protrusion 402 at one point in each of the two second regions A2, for total of three protrusions (spacer layer).

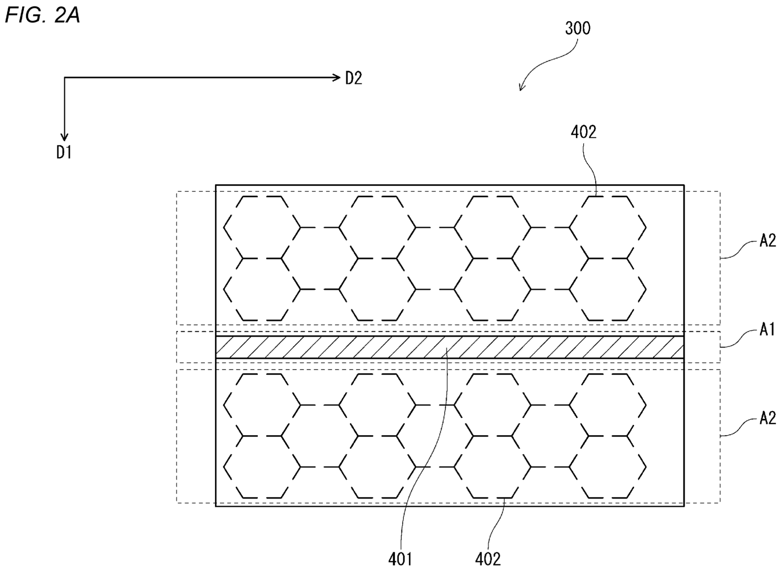

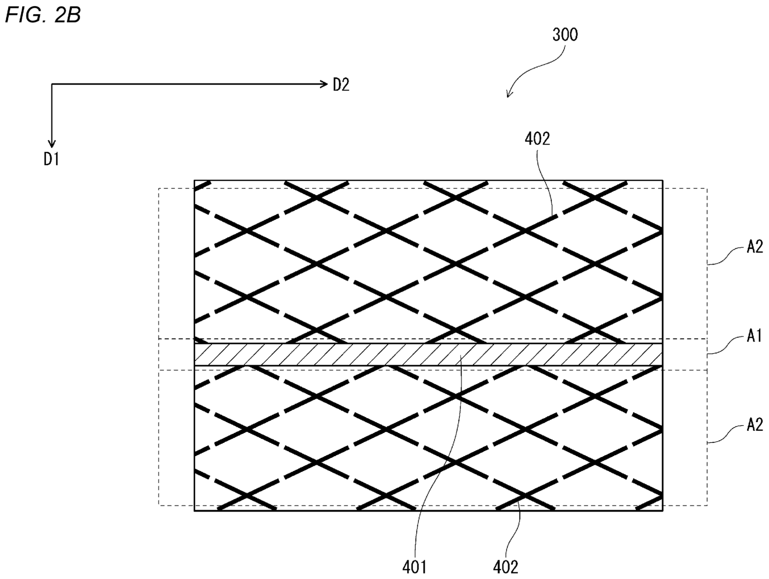

FIGS. 2A and 2B are plan views schematically showing another example of the arrangement of a spacer layer arranged on a surface of the separator. FIG. 2A shows an example in which an arrangement pattern of protrusions 402 (second portions) arranged in each of the second regions A2 in FIG. 1 is a second geometric pattern having a hexagonal mesh. The protrusions 402 have cutouts along each side of the hexagons that form the mesh.

FIG. 2B shows an example in which an arrangement pattern of protrusions 402 (second portions) arranged in each of the second regions A2 in FIG. 1 is a second geometric pattern in the form of a diamond mesh. The protrusions 402 have cutouts along each side of the diamonds that form the mesh.

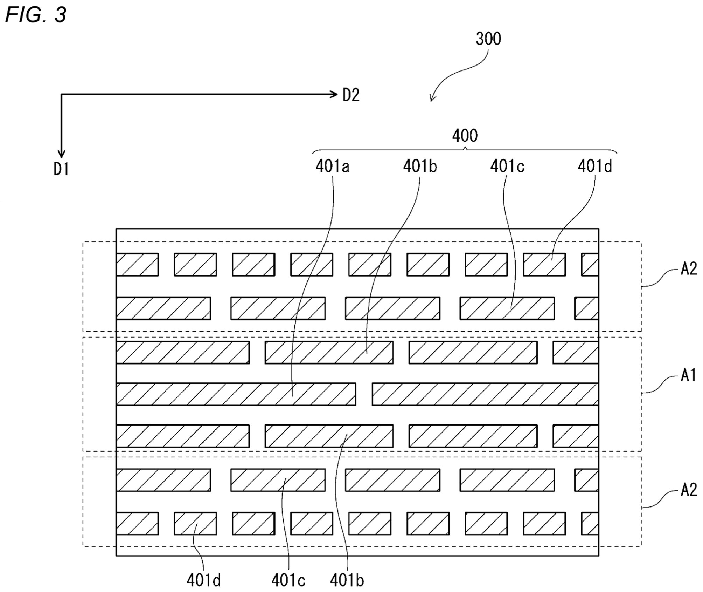

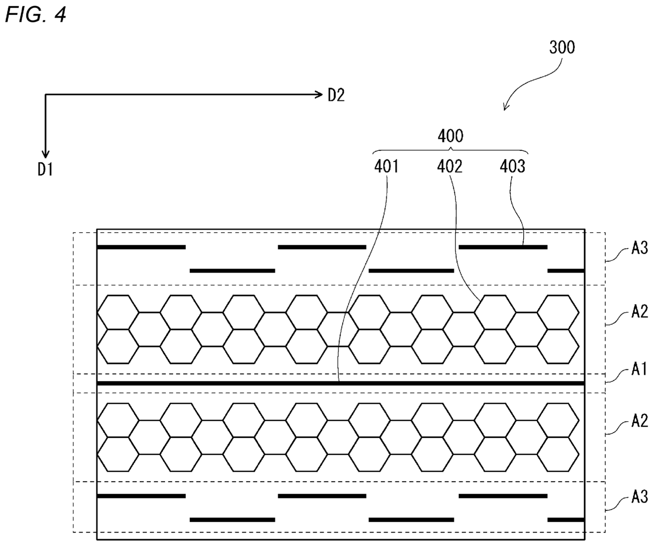

FIGS. 3 and 4 are plan views schematically showing still another example of the arrangement of the spacer layer arranged on a surface of the separator. In FIG. 3, the arrangement pattern of the line-shaped protrusions 401a to 401d is a pattern in which the line-shaped protrusions 401a to 401d extend intermittently along, as a whole, three or more (seven in the example shown in FIG. 3) straight lines that extend substantially parallel to each other along the second direction D2. Of the seven straight lines extending along the second direction D2, the further outward a straight line is from the center in the first direction D1, the shorter the length of a line-shaped protrusion along the straight line. On the other hand, a separation distance between adjacent line-shaped protrusions in the second direction (the length of the cutout) is the same for all seven straight lines. Therefore, the more outwardly a straight line is positioned in the first direction D1 from the center, the greater the number of cutouts, and therefore the longer the total length of cutouts and the greater the presence proportion of the cutouts.

In FIG. 4, a spacer layer 400 has a protrusion 401 (first portion) arranged in a first geometric pattern in a first region A1 located at the center in the first direction D1 on the separator surface , and protrusions 402 (second portions) arranged in a second geometric pattern in second regions A2 located on the outer sides of the first region A1 on the separator surface, and protrusions 403 (third portions) arranged in a third geometric pattern in third regions A3 located on the outer sides of the second region A2 on the separator surface. Note that the protrusions 402 may have cutouts similar to that shown in FIG. 2A, but this is not shown in FIG. 4. In the example shown in FIG. 4, the first geometric pattern is a single straight-line pattern extending substantially parallel to the second direction D2 and having no cutouts, the second geometric pattern is a hexagonal mesh-like pattern having cutouts (not shown), and the third geometric pattern is a line-shaped pattern having line-shaped protrusions in which line-shaped protrusions are arranged in a staggered manner along two straight lines extending substantially parallel to each other along the second direction D2, and cutouts are provided. The presence proportion of cutouts increases in the order of the third regions A3, the second regions A2, and the first region A1, in the order from the farthest from the center.

Constituent elements of the lithium secondary battery will be described below in more detail.

### [Negative Electrode]

The negative electrode includes a negative electrode current collector. In the lithium secondary battery, lithium metal is deposited on the surface of the negative electrode current collector due to charging. More specifically, lithium ions contained in the non-aqueous electrolyte receive electrons on the negative electrode current collector due to charging and become lithium metal, which is then deposited on the surface of the negative electrode current collector. The lithium metal deposited on the surface of the negative electrode current collector dissolves into the non-aqueous electrolyte as lithium ions due to discharging. Note that the lithium ions contained in the non-aqueous electrolyte may be lithium ions derived from a lithium salt added to the non-aqueous electrolyte, may be lithium ions supplied from the positive electrode active material by charging, or may be both types of lithium ions.

The negative electrode current collector is only required to be a conductive sheet. The conductive sheet may be a foil, a film, or the like.

The surface of the conductive sheet may be smooth. This makes it easier for lithium metal from the positive electrode to be deposited evenly on the conductive sheet during charging. "Smooth" means that the conductive sheet has a maximum height roughness Rz of 20 µm or less. The conductive sheet may have a maximum height roughness Rz of 10 µm or less. The maximum height roughness Rz is measured in accordance with JIS B 0601:2013.

The material of the negative electrode current collector (conductive sheet) may be any conductive material other than lithium metal and lithium alloy. The conductive material may be a metal material such as a metal or an alloy. The conductive material is preferably a material that does not react with lithium. More specifically, a material that does not form any alloy or intermetallic compound with lithium is preferable. Examples of such conductive materials include copper (Cu), nickel (Ni), iron (Fe), and alloys containing these metal elements, as well as graphite with the basal plane preferentially exposed. Examples of the alloy include copper alloy and stainless steel (SUS). Copper and/or copper alloy are preferable because of their high electrical conductivity.

The thickness of the negative electrode current collector is not particularly limited, and for example, is 5 µm or more and 300 µm or less.

A negative electrode mixture layer (not shown) may be formed on the surface of the negative electrode current collector. The negative electrode mixture layer is formed, for example, by applying a paste containing a negative electrode active material such as graphite to at least a portion of the surface of the negative electrode current collector. However, from the viewpoint of achieving a lithium secondary battery with a high capacity exceeding that of a lithium ion battery, the thickness of the negative electrode mixture layer is set to be sufficiently thin such that lithium metal can be deposited on the negative electrode. In this case, the open circuit potential of the negative electrode in the fully charged state may be 70 mV or less with respect to lithium metal (dissolution/deposition potential of lithium). When the open circuit potential of the negative electrode in the fully charged state may be 70 mV or less with respect to lithium metal, lithium metal is present on the surface of a lithium ion absorbing layer in the fully charged state. That is, the negative electrode develops capacity through deposition and dissolution of lithium metal.

### [Positive Electrode]

The positive electrode includes, for example, a positive electrode current collector and a positive electrode mixture layer supported by the positive electrode current collector. The positive electrode mixture layer includes, for example, a positive electrode active material, a conductive material, and a binder. The positive electrode mixture layer may be formed on only one surface of the positive electrode current collector, or on both surfaces. The positive electrode is obtained, for example, by applying a positive electrode mixture slurry containing a positive electrode active material, a conductive material, and a binder to both sides of a positive electrode current collector, drying the coating film, and then performing rolling.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, lithium-containing transition metal oxides are preferred because they have low production costs and high average discharge voltages.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one type of transition metal element or two or more types of transition metal elements. The transition metal element may be Co, Ni, and/or Mn. The lithium-containing transition metal oxide may contain one or more main group elements as necessary. Examples of the main group elements include Mg, Al, Ca, Zn, Ga, Ge, Sn, Sb, Pb, and Bi. The main group element may be Al or the like.

Among the lithium-containing transition metal oxides, composite oxides that contain Co, Ni, and/or Mn as transition metal elements, contain Al as an optional component in some cases, and have a layered rock-salt crystal structure are preferable in terms of obtaining high capacity. In this case, in the lithium secondary battery, the mole ratio mLi/mM of the total amount mLi of lithium in the positive electrode and the negative electrode to the amount mM of a metal M other than lithium in the positive electrode is set to, for example, 1.1 or less.

The conductive material is, for example, a carbon material. Examples of the carbon material include carbon black, acetylene black, ketjen black, carbon nanotubes, and graphite.

Examples of the binder include fluororesin, polyacrylonitrile, polyimide resin, acrylic resin, polyolefin resin, and rubber-like polymer. Examples of the fluororesin include polytetrafluoroethylene and polyvinylidene fluoride.

The positive electrode current collector is only required to be a conductive sheet. The conductive sheet may be a foil, a film, or the like. The surface of the positive electrode current collector may be coated with a carbon material.

Examples of the material for the positive electrode current collector (conductive sheet) include metal materials containing Al, Ti, Fe, and the like. The metal material may be Al, an Al alloy, Ti, a Ti alloy, an Fe alloy, or the like. The Fe alloy may be stainless steel (SUS).

The thickness of the positive electrode current collector is not particularly limited, and for example, is 5 µm or more and 300 µm or less.

### [Separator]

The separator is made of a porous sheet having ion permeability and insulating properties. Examples of the porous sheet include a thin film having micropores, a woven fabric, and a nonwoven fabric. The material of the separator is not particularly limited, but may be a polymer material. Examples of the polymer material include olefin resin, polyamide resin, cellulose, and the like. Examples of the olefin resin include polyethylene, polypropylene, and copolymers of ethylene and propylene. The separator may also contain additives as necessary. Examples of the additives include inorganic fillers.

### [Non-Aqueous Electrolyte]

The non-aqueous electrolyte having lithium-ion conductivity contains, for example, a non-aqueous solvent, and lithium ions and anions dissolved in the non-aqueous solvent. The non-aqueous electrolyte may be in a liquid state or a gel state.

The liquid non-aqueous electrolyte is prepared by dissolving a lithium salt in a non-aqueous solvent. When the lithium salt is dissolved in the non-aqueous solvent, lithium ions and anions are generated.

The gel non-aqueous electrolyte contains a lithium salt and a matrix polymer, or a lithium salt, a non-aqueous solvent, and a matrix polymer. As the matrix polymer, for example, a polymer material that gels by absorbing a non-aqueous solvent is used. Examples of the polymer material include fluororesin, acrylic resin, and polyether resin.

As the lithium salt or anion, any known material used in the non-aqueous electrolyte of a lithium secondary battery can be used. Specifically, BF₄⁻, ClO₄ , PF₆⁻, CF₃SO₃⁻, CF₃CO₂⁻, anions of imides, anions of oxalate complexes, and the like can be mentioned as examples. Examples of anions of imides include N(SO₂CF₃)2⁻, and N(CₘF₂ₘ₊₁SO₂)ₓ(CₙF₂ₙ₊₁SO₂)_{y}⁻ (where m and n are each independently an integer of 0 or 1 or more, and x and y are each independently 0, 1, or 2, and x + y = 2 is satisfied). The anion of the oxalate complex may also contain boron and/or phosphorus. The anions of the oxalate complexes include bisoxalate borate anions, BF₂(C₂O₄)⁻, PF₄(C₂O₄)⁻, and PF₂(C₂O₄)₂⁻. The non-aqueous electrolyte may contain one of these anions alone or two or more of them.

From the viewpoint of suppressing dendritic deposition of the lithium metal, the non-aqueous electrolyte preferably contains at least an anion of an oxalate complex. The interaction between the anion of the oxalate complex and lithium facilitates uniform deposition of the lithium metal in the form of fine particles. This makes it easier to suppress localized deposition of the lithium metal. The anions of the oxalate complex may be combined with other anions. The other anions may be PF₆⁻ and/or the anions of an imide.

Examples of the non-aqueous solvent include esters, ethers, nitriles, amides, and halogen-substituted compounds of these. The non-aqueous electrolyte may contain one of these non-aqueous solvents alone or two or more of them. Examples of the halogen-substituted compounds include fluorides.

Examples of the esters include carbonate esters and carboxylate esters. Examples of cyclic carbonate esters include ethylene carbonate, propylene carbonate, and fluoroethylene carbonate (FEC). Examples of chain carbonate esters include dimethyl carbonate (DMC), ethyl methyl carbonate (EMC), and diethyl carbonate. Examples of cyclic carboxylates include γ-butyrolactone and γ-valerolactone. Examples of chain carboxylates include ethyl acetate, methyl propionate, and methyl fluoropropionate.

Ethers include cyclic ethers and chain ethers. Examples of cyclic ethers include 1,3-dioxolane, 4-methyl-1,3-dioxolane, tetrahydrofuran, and 2-methyltetrahydrofuran. Examples of chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be 0.5 mol/L or more and 3.5 mol/L or less. The concentration of the anions of the oxalate complex in the non-aqueous electrolyte may be 0.05 mol/L or more and 1 mol/L or less.

The non-aqueous electrolyte may contain an additive. The additive may form a coating on the negative electrode. The formation of the coating derived from the additive on the negative electrode makes it easier to suppress the generation of dendrites. Examples of such additives include vinylene carbonate, FEC, vinyl ethyl carbonate (VEC), and the like.

Hereinafter, a configuration of the lithium secondary battery according to the present disclosure will be described with reference to the drawings, using a cylindrical battery having a rolled-up type electrode group as an example. However, the present disclosure is not limited to the following configuration.

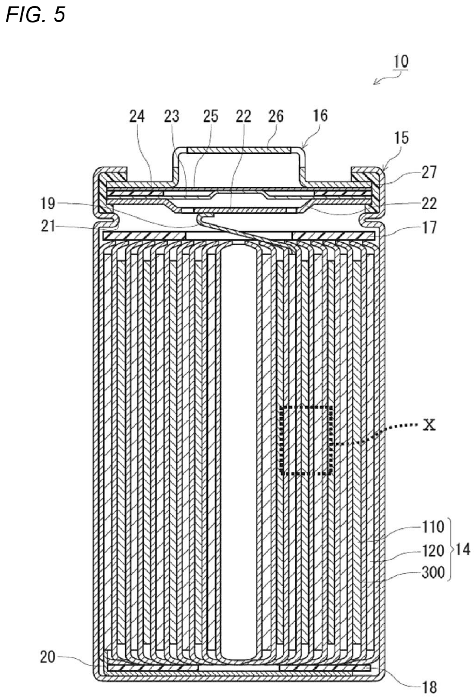

FIG. 5 is a vertical cross-sectional view of a lithium secondary battery 10. The lithium secondary battery 10 is a cylindrical battery that includes a cylindrical battery case, and a rolled-up type electrode group 14 and non-aqueous electrolyte (not shown) accommodated in the battery case. The battery case is constituted by a case body 15, which is a bottomed cylindrical metal container, and a sealing body 16 that seals the opening of the case body 15. The case body 15 has an annular step portion 21 formed by pressing a part of the side wall from the outside near the opening. The sealing body 16 is supported by the surface on the opening side of the step portion 21. A gasket 27 is disposed between the case body 15 and the sealing body 16, thereby ensuring the airtightness of the battery case. Insulating plates 17 and 18 are arranged inside the case body 15 on both ends in the rolling-up axis direction of the electrode group 14.

The sealing body 16 includes a filter 22, a lower valve body 23, an insulating member 24, an upper valve body 25, and a cap 26. The cap 26 is disposed outside the case body 15, and the filter 22 is disposed inside the case body 15. The lower valve body 23 and the upper valve body 25 are connected to each other at their respective central portions, and the insulating member 24 is interposed between their respective peripheral edge portions. The filter 22 and the lower valve body 23 are connected to each other at their respective peripheral edge portions. The upper valve body 25 and the cap 26 are connected to each other at their respective peripheral edge portions. An air hole is formed in the lower valve body 23. When the internal pressure of the battery case increases due to abnormal heat generation or the like, the upper valve body 25 bulges toward the cap 26 and separates from the lower valve body 23. As a result, the electrical connection between the lower valve body 23 and the upper valve body 25 is cut off. When the internal pressure increases further, the upper valve body 25 breaks, and gas is discharged from an opening formed in the cap 26.

The electrode group 14 is constituted by a positive electrode 110, a negative electrode (negative electrode current collector) 120, and a separator 300. The positive electrode 110, the negative electrode 120, and the separator 300 interposed between the positive electrode 110 and the negative electrode 120 are all band-shaped, and are spirally rolled up such that the width directions thereof are parallel to the rolling-up axis.

The positive electrode 110 is electrically connected via a positive electrode lead 19 to the cap 26, which also serves as a positive electrode terminal. One end of the positive electrode lead 19 is connected to, for example, a vicinity of the center of the positive electrode 110 in the longitudinal direction. The other end of the positive electrode lead 19 that extends from the positive electrode 110 passes through a through hole formed in the insulating plate 17 and is welded to an inner surface of the filter 22.

The negative electrode 120 is electrically connected via a negative electrode lead 20 to the case body 15, which serves as a negative electrode terminal. One end of the negative electrode lead 20 is connected to, for example, an end of the negative electrode 120 in the longitudinal direction, and the other end is welded to an inner bottom surface of the case body 15.

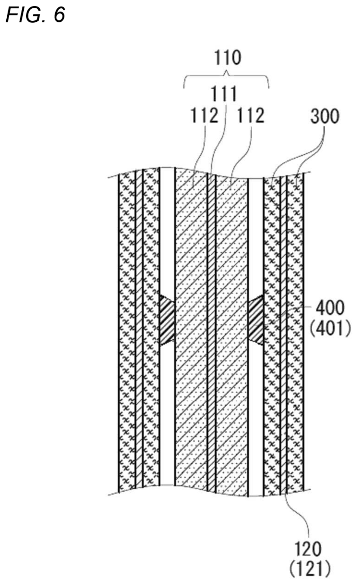

FIG. 6 is an enlarged view schematically showing a discharged state in a region X surrounded by dashed lines in FIG. 5. In the illustrated example, the cross-sectional shape of the spacer layer is trapezoidal. However, embodiments of the present disclosure are not limited to this. In the illustrated example, the spacer layer is provided between the positive electrode and the separator. However, embodiments of the present disclosure are not limited to this, and the spacer layers may be provided between the negative electrode and the separator, or between the positive electrode and the separator and between the negative electrode and the separator.

The positive electrode 110 includes a positive electrode current collector 111 and positive electrode mixture layers 112. The spacer layer 400 is provided between the positive electrode mixture layer 112 and the separator 300. The spacer layer 400 is constituted by a line-shaped protrusion 401 provided along the second direction D2 (longitudinal direction) of the separator 300. In a discharged state (a), no lithium metal is deposited on the surface of the negative electrode current collector 121, and a space is maintained between the positive electrode 110 and the separator 300. On the other hand, in a charged state, lithium metal is deposited on the surface of the negative electrode current collector 121 and is accommodated in the space between the positive electrode 110 and the separator 300 under a pressing force of the separator 300. That is, the negative electrode 120 includes a negative electrode current collector 121 in a discharged state, and includes the negative electrode current collector 121 and lithium metal deposited on the surface of the negative electrode current collector 121 in a charged state.

Since lithium metal is accommodated in the space between the positive electrode 110 and the separator 300, an apparent change in the volume of the electrode group that accompanies the deposition of lithium metal in charge/discharge cycles is reduced. Therefore, stress applied to the negative electrode current collector 121 is also suppressed. In addition, since pressure is applied from the separator 300 to the lithium metal accommodated between the positive electrode 110 and the separator 300, a deposition state of the lithium metal is controlled, the lithium metal is less likely to be isolated, and a decrease in charge-discharge efficiency is suppressed.

Although the cylindrical lithium secondary battery having a rolled-up type electrode group has been described in the illustrated example, the shape and the like of the lithium secondary battery can be selected as appropriate from various shapes such as a coin shape, a rectangular shape, a sheet shape, and a flat shape in addition to a cylindrical shape, depending on the application or the like. The form of the electrode group is not particularly limited, and may be a stacked type. In addition, as for a configuration of the lithium secondary battery other than the electrode group and the nonaqueous electrolyte, any known configuration may be used without any particular limitation.

### (Supplementary Notes)

The above description of the embodiments discloses the following technologies.

### (Technology 1)

A lithium secondary battery comprising: an electrode group including a positive electrode, a negative electrode facing the positive electrode, and a separator disposed between the positive electrode and the negative electrode; and
a non-aqueous electrolyte,
wherein the positive electrode and the negative electrode are rolled up with the separator interposed between the positive electrode and the negative electrode,
the positive electrode, the negative electrode, and the separator have an elongate shape having a length L1 in a first direction D1 parallel to a rolling-up axis and a length L2 in a second direction D2 perpendicular to the first direction (L1 < L2),
at the negative electrode, lithium metal is deposited during charging and the lithium metal dissolves during discharging,
at least one member selected from the group consisting of the positive electrode, the negative electrode, and the separator has a spacer layer,
the spacer layer includes at least a line-shaped first portion following a first geometric pattern and a line-shaped second portion following a second geometric pattern,
at least the second portion has a plurality of cutouts such that the second portion is not continuous in both the first direction and the second direction, and
when the member is divided in the first direction into a near center portion having an area S1 and two outer portions each having 1/2 of the area S1, the near center portion includes the first portion, and
a proportion of the cutouts present in the near center portion is smaller than a proportion of the cutouts present in the outer portions.

### (Technology 2)

The lithium secondary battery according to Technology 1, wherein, when a virtual line parallel to the first direction is drawn at a given position of the member, the virtual line always passes through the first portion at one or more points in the near center portion.

### (Technology 3)

The lithium secondary battery according to Technology 2, wherein the first portion extends continuously along the second direction without having the cutouts.

### (Technology 4)

The lithium secondary battery according to any one of Technologies 1 to 3, wherein, when a virtual line parallel to the first direction is drawn at a given position of the member, the virtual line passes through the spacer layer at two or more points.

### (Technology 5)

A separator having an elongate shape having a length L1 in a first direction D1 and a length L2 in a second direction D2 perpendicular to the first direction (L1 < L2), the separator including:
a base material layer; and
a spacer layer,
wherein the spacer layer is constituted by a plurality of protrusions such that the spacer layer is not continuous in both the first direction and the second direction, and
the spacer layer includes at least a line-shaped first portion following a first geometric pattern and a line-shaped second portion following a second geometric pattern,
at least the second portion has a plurality of cutouts such that the second portion is not continuous in both the first direction and the second direction,
when the separator is divided in the first direction into a near center portion having an area S1 and two outer portions each having 1/2 of the area S1, the near center portion includes the first portion, and
a proportion of the cutouts present in the near center portion is smaller than a proportion of the cutouts present in the outer portions.

### [Working Example]

The lithium secondary battery according to the present disclosure will be specifically described below based on working examples and comparative examples. The present disclosure is not limited to the following working examples.

### <Working Example 1>

### (1) Preparation of Positive Electrode

A lithium-containing transition metal oxide (NCA; positive electrode active material) containing Li, Ni, Co, and Al (a mole ratio of Li to a total of Ni, Co, and Al is 1.0) and having a layered rock salt-type crystal structure, acetylene black (AB; conductive material), and polyvinylidene fluoride (PVdF; binder) were mixed with a mass ratio of NCA : AB : PVdF = 95 : 2.5 : 2.5, and an appropriate amount of N-methyl-2-pyrrolidone (NMP) were added and stirred to prepare a positive electrode mixture slurry. Next, the obtained positive electrode mixture slurry was applied onto both sides of an Al foil (positive electrode current collector) and then dried, and a coating film of the positive electrode mixture was rolled using a roller. Finally, the resulting stacked body of the positive electrode current collector and the positive electrode mixture was cut to a predetermined electrode size to prepare a positive electrode having positive electrode mixture layers on both surfaces of the positive electrode current collector.

### (2) Formation of Spacer

A polyethylene separator (microporous film) was prepared. Polyimide ink was applied to a predetermined region of the surface of the separator, and then dried with hot air to provide a spacer layer made of polyimide resin (Young's modulus of 2 GPa). The polyimide ink was applied using a dispenser. The spacer layer had a pattern as shown in FIG. 2A, the pattern including a first geometric pattern in which a single linear protrusion is continuously formed along a straight line parallel to the second direction D2 in a first region A1 located at a center in the first direction D1, and a second geometric pattern in which regular hexagonal mesh-like protrusions having cutouts are formed in each of second regions A2 on the outer side of the first region A1.

The line width of each protrusion (the width in a direction perpendicular to the direction in which the protrusion extends) was 1 mm in the first region A1 and 0.5 mm in the second regions A2. The interval between protrusions in the second regions A2 (the separation distance between parallel opposite sides of the hexagons constituting the mesh) was 2.25 mm. The presence proportion of the cutouts in hexagonal mesh-like protrusions in each of the second regions A2 was 25%.

A ratio of the area of the first region A1 having the first geometric pattern to the area of the second regions A2 having a second geometric pattern was A1 : A2 = 1 : 15.

### (3) Preparation of Negative Electrode

A rectangular electrolytic copper foil (with a thickness of 15 µm) was prepared as a negative electrode current collector.

### (4) Preparation of Non-Aqueous Electrolyte

Ethylene carbonate (EC) and dimethyl carbonate (DMC) were mixed in a volume ratio of EC : DMC = 30 : 70, and LiPF6 and LiBF2(C2O4) were dissolved in the resulting mixed solvent at concentrations of 1 mol/L and 0.1 mol/L, respectively, to prepare a liquid nonaqueous electrolyte.

### (5) Assembly of Battery

In an inert gas atmosphere, the positive electrode and the negative electrode current collector were spirally rolled up with the separators interposed therebetween to prepare an electrode group. Since all of the lithium contained in the electrode group originates from the positive electrode, the mole ratio mLi/mM of the total amount mLi of lithium contained in the positive electrode and the negative electrode to the amount mM of metals M (here, Ni, Co, and Al) contained in the positive electrode was 1.0.

The electrode group was accommodated in a bag-shaped exterior body made of a laminate sheet having an Al layer, the above-described non-aqueous electrolyte was injected, and then the exterior body was sealed to complete a lithium secondary battery A1.

### <Working Example 2>

In the formation of the spacers in (2) above, the arrangement pattern of the spacer layer was set to include, as shown in FIG. 2B, a first geometric pattern in which a single linear protrusion is continuously formed along a straight line parallel to the second direction D2 in a first region A1 located at a center in the first direction D1, and a second geometric pattern in which diamond-shaped mesh-like protrusions having cutouts are formed in each of the second regions A2 on the outer sides of the first region A1.

The line width of each protrusion (the width in a direction perpendicular to the direction in which the protrusion extends) was 1 mm in the first region A1 and 0.5 mm in the second regions A2. The interval between protrusions in the second regions A2 (the separation distance between opposite sides of the diamonds constituting the mesh) was 2.25 mm. The presence proportion of the cutouts in diamond-shaped mesh-like protrusions in each of the second regions A2 was 25%.

A ratio of the area of the first region A1 having the first geometric pattern to the area of the second regions A2 having a second geometric pattern was A1 : A2 = 1 : 15.

A lithium secondary battery A2 was completed, with the rest of the process was the same as in Working Example 1.

### <Working Example 3>

In the formation of the spacers in (2) above, the arrangement pattern of the spacer layer was similar to that in FIG. 4, including a first geometric pattern in a first region A1 located at a center in the first direction D1, a second geometric pattern in second regions A2 located on the outer sides of the first region A1, and a third geometric pattern in a third regions A3 located on the outer sides of the second regions A2. The first, second, and third geometric patterns are patterns in which a plurality of linear protrusions are formed intermittently or continuously along straight lines parallel to the second direction D2, but the proportion of the cutouts present in the linear protrusions was varied. The presence proportion of the cutouts was 0% (no cutouts) in the first region A1 having the first geometric pattern, 25% in each of the second regions A2 having the second geometric pattern, and 50% in each of the third regions A3 having the third geometric pattern.

The line width of each protrusion (the width in a direction perpendicular to the direction in which the protrusion extends) was 1 mm in the first region A1, the second regions A2, and the third region sA3. The intervals between protrusions (the separation distance in the first direction D1) were 5 mm in the first region A1, the second regions A2, and the third regions A3.

A ratio of the area of the first region A1 having the first geometric pattern to the area of the second regions A2 having a second geometric pattern and to the area of the third regions A3 having the third geometric pattern was A1 : A2 : A3 = 1 : 2 : 3.

A lithium secondary battery A3 was completed, with the rest of the process was the same as in Working Example 1.

### <Comparative Example 1>

In the formation of the spacers in (2) above, the arrangement pattern of the spacer layer was a pattern including a first geometric pattern in which a plurality of linear protrusions were formed intermittently or continuously along a straight line parallel to the second direction D2. The line width of each protrusion (the width in a direction perpendicular to the direction in which the protrusion extends) was 1 mm, and the interval between protrusions (the separation distance in the first direction D1) was 5 mm. The presence proportion of the cutouts in the linear protrusion was 0% (no cutouts), and continuous linear protrusions were formed.

A lithium secondary battery B1 was completed in the same manner as in Working Example 1, except for the process other than this.

### <Comparative Example 2>

In the formation of the spacers in (2) above, the arrangement pattern of the spacer layer was a pattern including a first geometric pattern in which hexagonal mesh-like protrusions were formed. The line width of each protrusion (the width in a direction perpendicular to the direction in which the protrusion extends) was 0.5 mm, and the interval between protrusions (the separation distance between parallel opposite sides of the hexagons constituting the mesh) was 2.25 mm. The hexagonal mesh-like protrusions were continuously formed without providing cutouts, and the presence proportion of the cutouts was 0%.

A lithium secondary battery B2 was completed in the same manner as in Working Example 1, except for the process other than this.

### <Comparative Example 3>

In Comparative Example 1, the proportion of the cutouts present in the linear protrusion was changed to 50%, and linear protrusions extending intermittently along a straight line parallel to the second direction D2 were formed. A lithium secondary battery B3 was completed in the same manner as in Comparative Example 1, except for the process other than this.

### <Comparative Example 4>

In Comparative Example 2, cutouts were provided in hexagonal mesh-like protrusions, and the presence proportion of the cutouts in the hexagonal mesh-like protrusions was changed to 25%. A lithium secondary battery B4 was completed in the same manner as in Comparative Example 2, except for the process other than this.

### [Evaluation 1]

A charging/discharging test was performed on each of the obtained batteries. In the charging/discharging test, the battery was charged under the following conditions in a thermostatic chamber at 25°C, then was allowed to rest for 20 minutes and was discharged under the following conditions.

The battery was charged with a constant current of 10 mA per unit area (1 cm²) of the electrode until the battery voltage reached 4.3 V, and then was charged with a constant voltage of 4.3 V until the current value per unit area of the electrode reached 1 mA.

### (Discharging)

The battery was discharged with a constant current of 10 mA per unit area of the electrode until the battery voltage reached 3.0 V.

With the above charging and discharging constituting one cycle, the charge/discharge cycle was repeated. A ratio (%) of the discharge capacity at 50th cycle to the discharge capacity at the 1st cycle was calculated as the capacity retention rate.

In addition, the number of cycles was determined when the cycle ended, which was presumably caused by a crack in the negative electrode current collector due to expansion of the negative electrode. Evaluation results are shown in Table 1.

**[Table 1]**

| Battery | Geometric Pattern of Protrusions | Shape | Proportion of Cutouts (%) | Area Ratio of Each Pattern | Number of Cycles Ended | Capacity Retention Rate (%) |
|---|---|---|---|---|---|---|
| A1 | First Pattern | Linear | 0 | 1:15 | 200 | 98 |
| | Second Pattern | Regular Hexagon | 25 | | | |
| A2 | First Pattern | Linear | 0 | 1:15 | 200 | 98 |
| | Second Pattern | Diamond-shaped | 25 | | | |
| A3 | First Pattern | Linear | 0 | 1:2:3 | 200 | 98 |
| | Second Pattern | Linear | 25 | | | |
| | Third Pattern | Linear | 50 | | | |
| B1 | First Pattern | Linear | 0 | - | 230 | 60 |
| B2 | First Pattern | Regular Hexagon | 0 | - | 120 | 60 |
| B3 | First Pattern | Linear | 50 | - | 50 | 98 |
| B4 | First Pattern | Regular Hexagon | 25 | - | 30 | 98 |

The number of cycles until the cycle ended in the batteries A1 to A3 was greater than that in the batteries B3 and B4, and was comparable to that for the battery B1. The capacity retention rates of the batteries A1 to A3 were also higher than those of the batteries B1 and B2, and comparable to those of the batteries B3 and B4. Therefore, in the batteries A1 to A3, high capacity retention rate was achieved while the cycle was inhibited from ending due to the expansion of the negative electrode.

The lithium secondary battery according to the present disclosure can be used in electronic devices such as mobile phones, smartphones, and tablet terminals, electric vehicles including hybrids and plug-in hybrids, home storage batteries combined with solar cells, and the like.

Although the present invention has been described in terms of the presently preferred embodiments, such disclosure is not to be interpreted as limiting. Various modifications and variations will no doubt become apparent to those skilled in the art to which this invention pertains upon reading the above disclosure. It is therefore intended that the appended claims be interpreted to cover all such variations and modifications as do not depart from the true spirit and scope of the invention.

### [Reference Signs List]

10: lithium secondary battery, 14: electrode group, 15: case body, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 100: electrode, 110: positive electrode, 111: positive electrode current collector, 112: positive electrode mixture layer, 120: negative electrode, 121: negative electrode current collector, 300: separator, 400: spacer layer, 401, 401a to 401d, 402, 403: protrusions

## Claims

1. A lithium secondary battery comprising:
an electrode group including a positive electrode, a negative electrode facing the positive electrode, and a separator disposed between the positive electrode and the negative electrode; and
a non-aqueous electrolyte,
wherein the positive electrode and the negative electrode are rolled up with the separator interposed between the positive electrode and the negative electrode,
the positive electrode, the negative electrode, and the separator have an elongate shape having a length L1 in a first direction D1 parallel to a rolling-up axis and a length L2 in a second direction D2 perpendicular to the first direction (L1 < L2),
at the negative electrode, lithium metal is deposited during charging and the lithium metal dissolves during discharging,
at least one member selected from the group consisting of the positive electrode, the negative electrode, and the separator has a spacer layer,
the spacer layer includes at least a line-shaped first portion following a first geometric pattern and a line-shaped second portion following a second geometric pattern,
at least the second portion has a plurality of cutouts such that the second portion is not continuous in both the first direction and the second direction, and
when the member is divided in the first direction into a near center portion having an area S1 and two outer portions each having 1/2 of the area S1, the near center portion includes the first portion, and
a proportion of the cutouts present in the near center portion is smaller than a proportion of the cutouts present in the outer portions.

2. The lithium secondary battery according to claim 1,
wherein, when a virtual line parallel to the first direction is drawn at a given position of the member, the virtual line always passes through the first portion at one or more points in the near center portion.

3. The lithium secondary battery according to claim 2,
wherein the first portion extends continuously along the second direction without having the cutouts.

4. The lithium secondary battery according to any one of claims 1 to 3,
wherein, when a virtual line parallel to the first direction is drawn at a given position of the member, the virtual line passes through the spacer layer at two or more points.

5. A separator having an elongate shape having a length L1 in a first direction D1 and a length L2 in a second direction D2 perpendicular to the first direction (L1 < L2), the separator comprising:
a base material layer; and
a spacer layer,
wherein the spacer layer is constituted by a plurality of protrusions such that the spacer layer is not continuous in both the first direction and the second direction,
the spacer layer includes at least a line-shaped first portion following a first geometric pattern and a line-shaped second portion following a second geometric pattern,
at least the second portion has a plurality of cutouts such that the second portion is not continuous in both the first direction and the second direction, and
when the separator is divided in the first direction into a near center portion having an area S1 and two outer portions each having 1/2 of the area S1, the near center portion includes the first portion, and
a proportion of the cutouts present in the near center portion is smaller than a proportion of the cutouts present in the outer portions.
